# EUROPÄISCHE PATENTSCHRIFT

(11) **EP 0 761 742 B1**
(45) Veröffentlichungstag und Bekanntmachung des Hinweises auf die Patenterteilung: **14.03.2001**
(21) Anmeldenummer: 96112610.9
(22) Anmeldetag: 05.08.1996
(51) Int. Cl.: C08K 9/06, C08K 5/54, C08G 75/14

(54) **Verfahren zur Herstellung von immobilisierten polysulfidischen Silanen**
Process for the preparation of immobilized polysulfidic silanes.
Procédé de préparation de silanes polysulfidic immobilisées.

(30) Priorität: 16.08.1995 DE 19529916
(43) Veröffentlichungstag der Anmeldung: 12.03.1997
(73) Patentinhaber: BAYER AG, 51368 Leverkusen (DE)
(72) Erfinder: Scholl, Thomas, Dr., 51469 Bergisch Gladbach (DE)

(56) Entgegenhaltungen:
- EP-A- 0 126 871
- DE-A- 2 141 159
- DE-A- 2 141 160
- DE-A- 2 212 239
- DE-A- 2 255 577
- DE-A- 2 401 056
- DE-A- 2 747 277
- US-A- 4 514 231
- US-A- 4 704 414
- DATABASE WPI Week 8030 Derwent Publications Ltd., London, GB; AN 80-52417C XP002018982 & JP 55 076 860 (ISHIHARA SANGYOKAISHA) , 11.Juni 1980 & JP 55 076 860 A (ISHIHARA SANGYO KAISHA) 11.Juni 1980
- NOLL, W.: "Chemie und Technologie der Silicone" , VERLAG CHEMIE , WEINHEIM XP002018981 * Seite 74 - Seite 75 * * Seite 162 - Seite 165 * * Seite 163, letzter Absatz *

## Beschreibung

Die vorliegende Erfindung betrifft ein neues Verfahren zur Herstellung von immobilisierten, d.h. auf Trägermaterialien aufgebrachten, schwefelhaltigen Silanen. Die erfindungsgemäß hergestellten schwefelhaltigen Silane eignen sich zur Herstellung von Kautschukmischungen und zur Herstellung von Formkörpern daraus, insbesondere zur Herstellung von Reifen, die einen niedrigen Rollwiderstand sowie eine erhöhte dynamische und thermische Belastbarkeit (Reversionsbeständigkeit) aufweisen.

Polysulfidische Silane, insbesondere Bis-(triethoxisilylpropyl)-tetrasulfid, werden in der Kautschukindustrie häufig eingesetzt, insbesondere in Kautschukmischungen, die helle Füllstoffe enthalten. Die polysulfidischen Silane schaffen eine chemische Bindung zwischen Füllstoff und Kautschuk und erhöhen so das Verstärkungsniveau der hellen Füllstoffe. In DE-A 2 141 159 und 2 255 577 sind derartige polysulfische Silane beschrieben. Nachteilig an diesen Verbindungen ist ihr aufwendiges Herstellungsverfahren, insbesondere das Arbeiten in völlig wasserfreiem Medium und mit wasserfreiem Natriumsulfid um die entsprechenden Silyethergruppen vor Hydrolyse zu bewahren.

US-PS 4.514.231 und 4.704.414 beschreiben die Oberflächenmodifizierung von silikatischen Füllstoffen mit den Silanen der DE-A 2.141.159 und 2.255.577 in wässriger Suspension in Mengen von 0,3 bis 15 Gew. % Silan, bezogen auf silikatischen Füllstoff. Die verwendeten Silane wurden natürlich auch hier in einer völlig wasserfreien Reaktion hergestellt.

Es wurde jetzt ein überraschend einfaches Verfahren zur Herstellung hochwirksamer immobilisierter polysulfidischer Silane gefunden, das dadurch gekennzeichnet ist, daß man ein Halogenalkylsilan (A), gegebenenfalls in Gegenwart einer weiteren organischen Halogenverbindung (B), mit einem Polysulfid (C) in Gegenwart von Wasser oder in Gegenwart von Wasser im Gemisch mit organischen Lösungsmitteln als Reaktionsmedium und einem anorganischen oder organischen Trägermaterial bei Temperaturen von 0 - 220° C umsetzt, wobei der Anteil des Trägermaterials im (wasserunlöslichen und getrockneten) Endprodukt bei 20 bis 99,5 Gew. % liegt.

Das Molverhältnis der Komponenten (A) + (B) : (C) ist abhängig von der Zahl der gebundenen Halogenatome in den Ausgangsverbindungen (A) und (B) und liegt im Bereich von 1,5 bis 3 Mol gebundenem Halogen pro Mol Polysulfid (C).

Halogenalkylsilane (A), organische Halogenverbindungen (B) und Polysulfide (C), die in das erfindungsgemäße Verfahren eingesetzt werden, sind solche der Formeln

R¹R²R³Si-X(Hal)ₙ (A)

Y(Hal)ₘ (B)

Me₂Sₓ : (C)

worin
- R¹, R² und R³: gleich oder verschieden sind und für Chlor-, C₁-C₁₈-Alkyl- oder C₁-C₁₈-Alkoxireste stehen, die gegebenenfalls durch Sauerstoff, Stickstoffoder Schwefelatome unterbrochen sein können, oder C₆-C₁₂-Phenyl, - Phenoxi, C₇-C₁₈-Alkylaryl oder -Alkylaryloxi bedeuten, mit der Maßgabe, daß mindestens einer der Reste R¹ bis R³ eine Alkoxi-, Phenoxi-, Alkylaryloxigruppe oder ein Chloratom ist,
- X: für lineare, verzweigte oder cyclische, gegebenenfalls ungesättigte, C₁-C₁₈-Alkylenreste steht, die ggf. durch Sauerstoffatome unterbrochen sein können,
- Y: für einen ein- bis vierwertigen linearen, verzweigten, gegebenenfalls ungesättigten oder aromatischen C₁-C₃₆-Kohlenwasserstoffrest steht, der gegebenenfalls mit C₁-C₁₂-Aryl, C₁-C₁₂-Alkoxi, Hydroxi-, Cyano-, Amid-, C₁-C₁₇-COO- oder C₁-C₁₈-OOC-Gruppen, Carbonsäure- und Sulfonsäuregruppen sowie deren Salze substituiert sein kann sowie gegebenenfalls durch Sauerstoff, Stickstoff oder Schwefelatome unterbrochen sein kann oder für eine ein- bis dreiwertige Heteroarylgruppe steht,
- m: für eine ganze Zahl von 1 bis 4 steht,
- n: für eine ganze Zahl von 1 bis 3 steht,
- x: eine Zahl von 1 bis 8 bedeutet,
- Hal: für Fluor, Chlor oder Brom steht und
- Me: für Ammonium oder ein Metallatom steht.

Bevorzugte Halogensilane (A) sind z.B. solche der Formel

R¹R²R³Si - X - Hal,

worin
R¹, R² und R³ unabhängig voneinander für Chloratome, C₁-C₁₂Alkylreste, C₁-C₁₂-Alkoxireste, die jeweils noch durch Sauerstoff oder Schwefelatome unterbrochen sein können, oder für C₆-C₁₂-Aryl- oder C₆-C₁₂-Aryloxireste stehen, und worin X für lineare, verzweigte oder cyclische, C₁₋C₁₈-Alkylenreste steht, die gegebenenfalls. durch Sauerstoffatome unterbrochen sein können, und in denen Hal für Fluor, Chlor oder Brom steht.

Beispiele hierfür sind insbesondere 1-Chlormethyltrimethoxisilan, 1-Chlormethyltriethoxisilan, 1-Chlormethyltributoxisilan, 1-Chlormethyl-triethoxiethoxisilan, 1-Chlormethyl-methyl-dimethoxisilan, 1-Chlormethyl-methyl-diethoxisilan, 1-Chlormethyl-methoxy-dibutoxisilan, 1-Chlormethyl-dimethyl-methoxisilan, 1-Chlormethyl-dimethyl-ethoxisilan, 1-Chlormethyl-dimethyl-butoxisilan,3-Chlor-propyltrimethoxisilan, 3-Chlorpropyltriethoxisilan, 3-Chlorpropyltripropoxisilan 3-Chlorpropyltributoxisilan, 3-Chlorpropylpentoxisilan, 3-Chlorpropyltrihexoxisilan, 3-Chlorpropyltrioctoxisilan, 3-Chlorpropyl-triphenoxisilan, 3-Chlorpropylmethyldimethoxisilan, 3-Chlorpropyl-methyl-diethoxisilan, 3-Chlorpropyl-methyldibutoxisilan, 3-Chlorpropyl-dimethyl-methoxisilan, 3-Chlorpropyl-dimethylethoxisilan, 3-Chlorpropyl-diethyl-phenoxisilan. Bevorzugt sind insbesondere 1-Chlormethyl-methyl-diethoxisilan und 3-Chlorpropyltriethoxisilan.

Bevorzugte organische Halogenverbindungen (B) sind z.B. Alkylmonohalogenide, wie Methylchlorid, Ethylchlorid, Propylchlorid, Butylchlorid, Hexylchlorid, Octylchlorid, Dodecylchlorid, Octadecylchlorid, Benzylchlorid, Chorethanol, Chlorpropanol, Chloressigsäure und deren Alkalimetallsalze, Chlorpropionsäure und deren Alkalisalze, sowie Alkylendihalogenide, in denen Y Methylen-, Ethylen-, Propylen-, 2-Hydroxipropylen-, Butylen, Hexylen, Cyclohexylen-, Octylen-, Decyclen-, Dodecyclen-, 2,2'-Oxidiethylen-, Methylen-bis-(2,2'-oxiethylen)-, Ethylen-(bis-2,2'-oxiethylen)-, 2,2'-Thiodiethylen-, N-Methyl-N',N''-diethylen- oder α,α-p-Xylidenreste; oder auch 1.2.3-Trichlorpropan, 1.3.5-Trichlortriazin. Die organischen Halogenverbindungen (B) können einzeln oder auch im Gemisch eingesetzt werden. Besonders bevorzugt sind 1,6-Dichlorhexan und Bis-(chlorethyl)-formal sowie 1,2,3-Trichlorpropan.

Bevorzugte Molverhältnisse der Halogenalkylsilane (A) und weiteren organischen Halogenverbindungen (B) liegen bei 1 : 0 bis 1 : 100. Ganz besonders bevorzugte Verhältnisse liegen bei 1 : 0 bis 1 : 30.

Als Polysulfide (C) werden bevorzugt solche eingesetzt, in der Me für Ammonium, Lithium, Natrium oder Kalium steht.

Als Reaktionsmedium wird Wasser verwendet. Daneben können auch Gemische von Wasser mit organischen Lösungsmitteln verwendet werden, wie z.B. Methanol, Ethanol, n-Propanol, i-Propanol, i-Butanol, Amylalkohol, Hexylalkohol, n-Octanol, i-Octanol, Ethylenglykol, 1,2- und 1,3-Propylenglykol, 1,4-Butandiol, 1,6-Hexandiol, sowie Gemische mit aromatischen, aliphatischen oder cycloaliphatischen Kohlenwasserstoffen, wie z.B. Toluol, Cyclohexan, Hexan, Octan, oder offenkettige oder cyclische Ether, wie z.B. Diethylether, Dibutylether, Tetrahydrofuran, 1,3-Dioxolan.

Besonders geeignete organische und anorganische Trägermaterialien für das erfindungsgemäße Verfahren sind z.B.:
- Ruße. Die hierbei zu verwendenden Ruße sind nach dem Flammruß-, Furnace- oder Gasruß-Verfahren hergestellt und besitzen BET-Oberflächen von 20 bis 200 m²/g, wie z.B. SAF-, ISAF-, IISAF-, HAF-, FEF- oder GPF-Ruße.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1 000, vorzugsweise 20 bis 400 m²/g (BET-Oberfläche) und mit Primärteilchengrößen von 5 bis 400 nm. Die Kieselsäuren können gegebenenfalls auch als Mischoxide mit anderen Metalloxiden, wie Al-, Mg-, Ca-, Ba-, Zn- und Ti- oxiden vorliegen.
- Synthetische Silikate, wie Aluminiumsilikat, Erdalkalisilikate wie Magnesiumsilikat oder Calciumsilikat, mit BET-Oberflächen von 20 bis 400 m²/g und Primärteilchendurchmessern von 10 bis 400 nm.
- Natürliche Silikate, wie Kaolin und andere natürlich vorkommende Kieselsäuren.
- Metalloxide, wie Zinkoxid, Calciumoxid, Magnesiumoxid, Aluminiumoxid
- Metallcarbonate, wie Magnesiumcarbonat, Calciumcarbonat, Zinkcarbonat
- Metallsulfate, wie Calciumsulfat, Bariumsulfat
- Metallhydroxide, wie z.B. Aluminiumhydroxid, Magnesiumhydroxid
- Glasfasern und Glasfaserprodukte (Matten, Stränge) oder Mikroglaskugeln.

Bevorzugt werden Ruße mit BET-Oberflächen von 20 bis 400 m²/g oder hochdisperse Kieselsäuren, hergestellt durch Fällung von Lösungen von Silikaten, mit BET-Oberflächen von 20 bis 400 m²/g. Die genannten Trägermaterialien können alleine oder im Gemisch eingesetzt werden Besonders bevorzugte Produkte enthalten 25-99 Gew. % Trägermaterial im Endprodukt (Trockengewicht).

Das Molverhältnis der Komponenten (A) : (B) : (C) ist abhängig von der Zahl gebundener Halogenatome in den Ausgangsverbindungen (A) und (B) und beträgt pro Mol Polysulfid 1,5 - 3 mol reaktives (Mono-) Halogenid. Es wird idealerweise so gewählt, daß pro Mol Polysulfid 2 mol (Mono-) Halogenid umgesetzt werden. Die angegebenen Molverhältnisse beziehen sich auf Monohalogenverbindungen. Beim Einsatz von Polyhalogenverbindungen muß das Verhältnis von Polsulfid zu Polyhalogenverbindung entsprechen umgerechnet werden. Die genannten Molverhältnisse gelten nur für gegenüber Polsulfide in wässriger Lösung reaktive Halogenverbindungen.

Werden Halogenalkylsilane (A) eingesetzt, in denen einer oder mehrere der Reste R¹ bis R³ für ein Chloratom steht, so empfiehlt sich die Zugabe einer Base, wie z.B. NaOH, KOH, Ca(OH)₂, Na₂CO₃ oder K₂CO₃, um die freiwerdende Salzsäure zu neutralisieren.

Die Reaktionstemperaturen liegen bei 0 bis 200°C; gegebenenfalls kann unter Druck gearbeitet werden. Die Reaktionszeiten liegen zwischen wenigen Minuten bis zu 24 Stunden. Im Anschluß an die Reaktion kann das Reaktionsprodukt abfiltiert, durch Wäsche von wasserlöslichem Metallhalogenid befreit und getrocknet werden. Das feuchte Reaktionsprodukt kann auch unmittelbar nach der Reaktion weiterverarbeitet werden, beispielsweise zur Herstellung von Kautschuk/Füllstoff-Masterbatches, in denen das auf dem Trägermaterial immobilisierte schwefelhaltige Silan sowohl als verstärkender Füllstoff als auch als Verstärkeradditiv in Kombination mit weiteren Füllstoffen dienen kann.

Einsatzgebiet der vorliegenden Erfindung sind auch Kautschukmischungen enthaltend einen Kautschuk, einen Füllstoff, gegebenenfalls weitere Kautschukhilfsmittel und ein nach dem erfindungsgemäßen Verfahren hergestelltes immobilisiertes polysulfidisches Silan in Mengen von 0,1 bis 200 Gew.-%, bezogen auf die Menge des jeweils eingesetzten Kautschuks, sowie die daraus hergestellten Vulkanisate und Formkörper.

Für die Herstellung der Kautschukmischungen eignen sich neben Naturkautschuk auch Synthesekautschuke. Bevorzugte Synthesekautschuke sind beispielsweise bei W. Hofmann, Kautschuktechnologie, Gentner Verlag, Stuttgart 1980, oder bei I. Franta, Elastomers and Rubber Compounding Materials, Elsevier, New York 1989, beschrieben. Sie umfassen u.a.
- BR -: Polybutadien
- ABR -: Butydien/Acrylsäure-C₁₋₄-alkylester-Copolymere
- IR -: Polyisopren
- SBR -: Styrol/Butadien-Copolymerisate mit Styrolgehalten von 1 bis 60, vorzugsweise 2 bis 50 Gew.-%
- XSBR -: Styrol/Butadien-Copolymerisate und Pfropfpolymerisate mit weiteren ungesättigten polaren Monomeren, wie z.B. Acrylsäure, Methacrylsäure, Acrylnitril, Hydroxiethylacrylat, Hydroxiethylmethacrylat etc. mit Styrolgehalten von 2-50 Gew. % und Gehalten an einpolymerisierten polaren Monomeren von 1-30 Gew. %.
- IIR -: Isobutylen/Isopren-Copolymerisate
- NBR -: Butadien/Acrylnitril-Copolymere mit Acrylnitrilgehalten von 5 bis 60, vorzugsweise 10 bis 50 Gew.-%
- HNBR -: teilhydrierter oder vollständig hydrierter NBR-Kautschuk
- EPDM -: Ethylen/Propylen/Dien-Copolymerisate
sowie Mischungen dieser Kautschuke. Für die Herstellung von Kfz-Reifen sind insbesondere anionisch polymerisierte L-SBR-Kautschuke mit einer Glastemperatur oberhalb von -50°C, die gegebenenfalls mit Silylethern oder anderen funktionellen Gruppen, modifiziert sein können, wie sie z.B. in der EP-A 447 066 beschrieben sind, sowie deren Mischungen mit Dienkautschuken von Interesse.

Die Zugabe der erfindungsgemäßen immobilisierten schwefelhaltige Silane sowie die Zugabe weiterer Füllstoffe erfolgt bevorzugt bei Massetemperaturen von 100 bis 200°C, sie kann jedoch auch später bei tieferen Temperaturen (40 bis 100°C) z.B. zusammen mit weiteren Kautschukhilfsmitteln erfolgen.

Besonders geeignete Füllstoffe zur Herstellung der Kautschukmischungen und Vulkanisate sind
- Ruße. Die hierbei zu verwendenden Ruße sind nach dem Flammruß-, Furnace- oder Gasruß-Verfahren hergestellt und besitzen BET-Oberflächen von 20 bis 200 m²/g, wie z.B. SAF-, ISAF-, IISAF-, HAF-, FEF- oder GPF-Ruße.
- hochdisperse Kieselsäuren, hergestellt z.B. durch Fällung von Lösungen von Silikaten oder Flammenhydrolyse von Siliciumhalogeniden mit spezifischen Oberflächen von 5 bis 1 000, vorzugsweise 20 bis 400 m²/g (BET-Oberfläche) und mit Primärteilchengrößen von 5 bis 400 nm. Die Kieselsäuren können gegebenenfalls auch als Mischoxide mit anderen Metalloxiden, wie Al-, Mg-, Ca-, Ba-, Zn- und Tioxiden vorliegen.
- Synthetische Silikate, wie Aluminiumsilikat, Erdalkalisilikate wie Magnesiumsilikat oder Calciumsilikat, mit BET-Oberflächen von 20 bis 400 m²/g und Primärteilchendurchmessern von 10 bis 400 nm.
- Natürliche Silikate, wie Kaolin und andere natürlich vorkommende Kieselsäuren.
- Metalloxide, wie Zinkoxid, Calciumoxid, Magnesiumoxid, Aluminiumoxid
- Metallcarbonate, wie Magnesiumcarbonat, Calciumcarbonat, Zinkcarbonat
- Metallsulfate, wie Calciumsulfat, Bariumsulfat
- Metallhydroxide, wie Aluminiumhydroxid und Magnesiumhydroxid
- Glasfasern und Glasfaserprodukte (Matten, Stränge) oder Mikroglaskugeln.

Die genannten Füllstoffe können alleine oder im Gemisch eingesetzt werden. In einer besonders bevorzugten Ausführung des Verfahrens werden 10 bis 150 Gew.-Teile helle Füllstoffe, gegebenenfalls zusammen mit 0 bis 100 Gew.-Teilen Ruß, sowie 0,3 bis 40 Gew.-Teile eines nach dem erfindungsgemäßen Verfahren hergestellten immobilsierten schwefelhaltigen Silans, jeweils bezogen auf 100 Gew.-Teile Kautschuk, zur Herstellung der Mischungen eingesetzt, wobei das immobilisierte, schwefelhaltige Silan einen Trägeranteil von 40 bis 80 Gew.-% besitzt.

Die Kautschukvulkanisate können weitere Kautschukhilfsprodukte enthalten wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol, die der Gummiindustrie bekannt sind.

Die Kautschukhilfsmittel werden in üblichen Mengen, die sich unter anderem nach dem Verwendungszweck richten, eingesetzt. Übliche Mengen sind z.B. Mengen von 0,1 bis 50 Gew.-% bezogen auf Kautschuk.

Als übliche Vemetzer können Schwefel, Schwefelspender oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, -sulfenamide, Guanidine, Thiurame, Dithiocarbamate, Thioharnstoffe und Thiocarbonate. Die Vulkanisationsbeschleuniger und Schwefel oder Peroxide werden in Mengen von 0,1 bis 10 Gew.-%, bevorzugt 0,1 bis 5 Gew.-%, bezogen auf Kautschuk, eingesetzt.

Die Vulkanisation der erfindungsgemäßen Kautschukmischungen kann bei Temperaturen von 100 bis 200°C, bevorzugt 130 bis 180°C, gegebenenfalls unter Druck von 10 bis 200 bar erfolgen.

Die Abmischung der Kautschuke mit dem Füllstoff, gegebenenfalls Kautschukhilfsmitteln und den erfindungsgemäßen immobilisierten schwefelhaltigen Silanen kann in üblichen Mischaggregaten, wie Walzen, Innenmischern und Mischextrudern, durchgeführt werden.

Die Kautschukvulkanisate eignen sich zur Herstellung von Formkörpern, z.B. für die Herstellung von Kabelmänteln, Schläuchen, Treibriemen, Förderbändern, Walzenbelägen, Reifen, Schuhsohlen, Dichtungsringen und Dämpfungselementen.

### Beispiele

### Beispiel 1

65 g (0.5 mol) Na₂S x 3 H₂0 (Na₂S-Gehalt 60 Gew. %) und 48 g (1,5 mol) Schwefel wurden in 1000 ml Wasser 30 Minuten auf 70° C erhitzt, sodaß sich eine Natriumpolysulfidlösung bildete. Dann setzte man 269 g Vulkasil S (hochaktive gefällte Kieselsäure der Bayer AG, BET-Oberfläche ca. 180 m2/g) hinzu. Anschließend tropfte man bei 70° C 240,4 g (1,0 mol) 3-Chlorpropyltriethoxysilan hinzu hinzu und erhitzte 18 Stunden auf 80° C. Nach dem Abkühlen wurde der Feststoff abfiltriert und mit Wasser gewaschen und erst bei Raumtemperatur und später bei 80° C 6 Stunden im Hochvakuum getrocknet. Man erhielt 504 g eines weißen Pulvers. Der Anteil des Trägermaterials beträgt ca. 53 Gew. %.

### Beispiel 2

48,75 g (0,375 mol) Na₂S x 3 H₂0 (Na₂S-Gehalt ca. 60 Gew. %) und 36 g Schwefel wurden in 500 ml Wasser 30 Minuten auf 70° C erhitzt sodaß sich eine Natriumpolysulfid-Lösung bildete. Daraufhin setzte man 125 g Vulkasil S und 0,5 g eines Umsetzungsproduktes von Nonylphenol mit 10 mol Ethylenoxid als Emulgator hinzu und tropfte erst 45,1 g (0,188 mol) 3-Chlorpropyl-triethoxisilan und nach einer Stunde bei 70° C 48,7 g (0,281 mol) Bis-(chlorethyl)-formal hinzu. Es wurde 14 Stunden auf 80-90° C erhitzt und nach dem Abkühlen filtriert und mit Wasser gewaschen. Nach dem Trocknen bei 80° C im Hochvakuum erhielt man 216 g eines weißen Pulvers. Der Anteil des Trägermaterials beträgt ca. 58 Gew. %.

### Beispiel 3

65 g (0,5 mol) Na₂S x 3 H₂O (ca. 60 Gew. % Na₂S) und 48 g (1,5 mol) Schwefel werden in 1000 ml Wasser 1 Stunde auf 70° C erhitzt. Dann setzte man 1 g eines Umsetzungsproduktes von Nonylphenol mit 10 mol Ethylenoxid als Emulgator hinzu sowie 269 g Ruß Corax N 339 (Degussa) hinzu und tropfte bei derselben Temperatur 240,4 g (1 mol) 3-Chlorpropyl-triethoxisilan hinzu. Es wurde 14 Stunden bei 80° C nachgerührt und anschließend abfiltriert und mit Wasser gewaschen. Nach dem Trocknen resultierten 483 g eines schwarzen Pulvers. Der Anteil des Trägermaterials beträgt ca. 56 Gew. %.

### Beispiel 4

97,5 g (0,75 mol) Na₂S x 3 H₂O (ca. 60 Gew. % Na₂S-Gehalt) und 72 g (2,25 mol) Schwefel wurden in 1000 ml Wasser 45 Minuten auf 70° C erhitzt. Anschließend setzte man 250 g Ruß N 339 und 1 g eines Umsetzungsproduktes von Nonylphenol mit 10 mol Ethylenoxid hinzu. Daraufhin wurde ein Gemisch aus 90,2 g (0,375 mol) 3-Chlorpropyl-triethoxisilan und 97,3 g (0,563 mol) Bis-(chloethyl)-formal hinzugetropft und 14 Stunden auf 80° C erhitzt. Nach dem Abfiltrieren, Waschen mit Wasser und Trocknen erhielt man 472 g eines schwarzen Pulvers. Der Anteil des Trägermaterials beträgt ca. 53 Gew. %.

### Beispiel 5 (Herstellung von Kautschukmischungen und Vulkanisaten)

Die folgenden Mischungen wurden innerhalb von 5 Minuten bei 130°C in einem Innenmischer hergestellt. Die Rohmischungen wurden nach dem Erkalten noch einmal 3 Minuten bei 120-130° im Innenmischer geknetet. Im Anschluß wurden bei 50° C Schwefel und Beschleuniger auf der Walze zugemischt.

| **Zusammensetzung:** | **A** | **B** | **C** | **Vergleich** |
|---|---|---|---|---|
| L-SBR Buna VSL 1954 S 25 (Bayer) | 75 | | | |
| BR-Kautschuk Buna CB 11 (Bayer) | 25 | | | |
| Ruß Corax N339 (Degussa) | 6 | 6 | 0 | 6 |
| Kieselsäure Vulkasil S (Bayer) | 73,5 | 73,5 | 80 | 80 |
| Stearinsäure | 1 | | | |
| Zinkoxid | 2,5 | | | |
| Antiozonant Vulkanox 4020 (Bayer) | 1 | | | |
| Ozonschutzwachs Antilux 654 (Rheinchemie) | 1,5 | | | |
| Verbindung gem. Bsp. 1 | 13 | 0 | 0 | 0 |
| Verbindung gem. Bsp. 2 | 0 | 13 | 0 | 0 |
| Verbindung gem. Bsp. 4 | 0 | 0 | 13 | 0 |
| Bis (triethoxysilyl-propyl)tetrasulfid gemäß DE-OS 2 255 577 | 0 | 0 | 0 | 6,5 |
| | | | | |
| Schwefel | 1,5 | | | |
| CBS, Vulkacit CZ (Bayer) | 1,5 | | | |
| Diphenylguanidin, Vulkacit DPG (Bayer) | 2 | | | |

Die Kautschukmischungen wurden daraufhin 40 Minuten bei 160° C vulkanisiert. Es wurden folgende Vulkanisateigenschaften gefunden:

| **Eigenschaft:** | **A** | **B** | **C** | **Vergleich** |
|---|---|---|---|---|
| Spannungswert bei 300 % Dehnung (MPa) | 13,8 | 13,9 | 13,4 | 13,5 |
| Zugfestigkeit (MPa) | 17,7 | 18,1 | 16,4 | 18,3 |
| Bruchdehnung (%) | 368 | 384 | 360 | 387 |
| Härte (Shore A) | 72 | 80 | 81 | 73 |
| Elastizität (%) bei 23°C | 26 | 30 | 31 | 28 |
| Elastizität (% bei 70°C | 46 | 47 | 48 | 46 |

Aus den mechanischen Eigenschaften der Vulkanisate wird ersichtlich, daß die in wässriger Suspension hergestellten erfindungsgemäßen immobilisierten Silane ähnlich wirksam sind wie die in organischem Lösungsmittel unter wasserfreien Bedingungen hergestellte Vergleichsverbindung Bis-(triethoxisilylpropyl)-tetrasulfid.

## Patentansprüche

1. Verfahren zur Herstellung von auf Trägermaterialien aufgebrachten polysulfidischen Silanen, dadurch gekennzeichnet, daß man Halogenalkylsilane (A), gegebenenfalls in Gegenwart einer weiteren organischen Halogenverbindung (B), mit einem Polysulfid (C) in Gegenwart von Wasser oder in Gegenwart von Wasser im Gemisch mit organischen Lösungsmitteln als Reaktionsmedium und einem anorganischen oder organischen Trägermaterial bei Temperaturen von 0-220°C umsetzt, wobei der Anteil des Trägermaterials im (getrockneten und wasserunlöslichen) Endprodukt bei 20 -99,5 Gew.-% liegt und wobei das Molverhältnis der Komponenten (A) + (B) : (C) abhängig von der Zahl der gebundenen Halogenatome in den Ausgangskomponenten (A) und (B) ist und in Bereichen von 1,5-3 mol gebundenem Halogen pro mol Polysulfid (C) liegt.

2. Verfahren nach Anspruch 1, dadurch gekennzeichnet, daß man als Halogenalkylsilane (A), organischen Halogenverbindungen (B) und Polysulfiden (C), solche der Formel
R¹R²R³Si-X(Hal)ₙ (A)
Y(Hal)ₘ (B)
Me₂Sₓ (C)
einsetzt,
worin
R¹, R² und R³ gleich oder verschieden sind und für Chlor-, C₁-C₁₈-Alkyl- oder C₁-C₁₈-Alkoxireste stehen, die gegebenenfalls durch Sauerstoff, Stickstoff- oder Schwefelatome unterbrochen sein können, oder C₆-C₁₂-Phenyl, -Phenoxi, C₇-C₁₈-Alkylaryl oder -Alkylaryloxi bedeuten, mit der Maßgabe, daß mindestens einer der Reste R¹ bis R³ eine Alkoxi-, Phenoxi- oder Alkylaryloxigruppe oder ein Chloratom ist;
X für lineare, verzweigte oder cyclische, gegebenenfalls ungesättigte, C₁-C₁₈-Alkylenreste steht, die gegebenenfalls durch Sauerstoffatome unterbrochen sein können,
Y für einen ein- bis vierwertigen linearen, verzweigten, gegebenenfalls ungesättigten oder aromatischen C₁-C₃₆-Kohlenwasserstoffrest steht, der gegebenenfalls mit C₁-C₁₂-Aryl, C₁-C₁₂-Alkoxi, Hydroxi-, Cyano-, Amid-, C₁-C₁₇-COO- oder C₁-C₁₈-OOC-Gruppen, Carbonsäure- und Sulfonsäuregruppen sowie deren Salze substituiert sein kann sowie gegebenenfalls durch Sauerstoff, Stickstoff oder Schwefelatome unterbrochen sein kann oder für eine ein- bis dreiwertige Heteroarylgruppe steht,
m für eine ganze Zahl von 1 bis 4 steht,
n für eine ganze Zahl von 1 bis 3 steht,
x eine Zahl von 1 bis 8 bedeutet,
Hal für Fluor, Chlor oder Brom steht und
Me für Ammonium oder ein Metallatom steht.

## Claims

1. Process for producing polysulfidic silanes applied to carrier materials, characterised in that halogenated alkyl silanes (A), optionally in the presence of a further organic halogen compound (B), are converted with a polysulfide (C) in the presence of water or in the presence of water in a mixture with organic solvents by way of reaction medium and with an inorganic or organic carrier material at temperatures of 0 - 220 °C, wherein the content of the carrier material in the (dried and water-insoluble) end product is 20 - 99.5 wt.% and wherein the molar ratio of the components (A) + (B) : (C) depends on the number of bound halogen atoms in the starting components (A) and (B) and lies in ranges from 1.5 to 3 mols of bound halogen per mol of polysulfide (C).

2. Process according to Claim 1, characterised in that the halogenated alkyl silanes (A), organic halogen compounds (B) and polysulfides (C) which are used are those of the formulae
R¹R²R³Si-X (Hal)ₙ (A)
Y (Hal)ₘ (B)
Me₂Sₓ (C)
wherein
R¹, R² and R³ are the same or different and stand for chlorine, C₁-C₁₈-alkyl or C₁-C₁₈-alkoxy residues, which can optionally be interrupted by oxygen, nitrogen or sulfur atoms, or mean C₆-C₁₂-phenyl, C₆-C₁₂-phenoxy, C₇-C₁₈-alkylaryl or C₇-C₁₈-alkylaryloxy, with the proviso that at least one of the residues R¹ to R³ is an alkoxy group, phenoxy group or alkylaryloxy group or a chlorine atom;
X stands for linear, branched or cyclic, optionally unsaturated, C₁-C₁₈-alkylene residues, which can optionally be interrupted by oxygen atoms,
Y stands for a monovalent to tetravalent linear, branched, optionally unsaturated or aromatic C₁-C₃₆-hydrocarbon residue, which can optionally be substituted by C₁-C₁₂-aryl, C₁-C₁₂-alkoxy, hydroxy, cyano, amide, C₁-C₁₇-COO or C₁-C₁₈-OOC groups, carboxylic-acid and sulfonic-acid groups as well as the salts thereof and can also optionally be interrupted by oxygen, nitrogen or sulfur atoms or stands for a monovalent to trivalent heteroaryl group,
m stands for a whole number from 1 to 4,
n stands for a whole number from 1 to 3,
x means a number from 1 to 8,
Hal stands for fluorine, chlorine or bromine and
Me stands for ammonium or a metal atom.

## Revendications

1. Procédé de préparation de silanes polysulfurés appliqués sur des matériaux supports, caractérisé en ce que l'on fait réagir à des températures de 0-220°C des halogénoalkylsilanes (A), éventuellement en présence d'un autre composé halogéné organique (B), avec un polysulfure (C) en présence d'eau ou en présence d'eau en mélange avec des solvants organiques à titre de milieu réactionnel et d'un matériau support inorganique ou organique, où la proportion de matériau support dans le produit final (séché et insoluble dans l'eau) est de 20-99,5 % en masse et où le rapport molaire des composants (A)+(B) : (C) dépend du nombre des atomes d'halogène liés dans les composants de départ (A) et (B) et est situé dans des domaines de 1,5-3 mol d'halogène lié par mole de polysulfure (C).

2. Procédé selon la revendication 1, caractérisé en ce que l'on utilise comme halogénoalkylsilanes (A), composés halogénés organiques (B) et polysulfures (C) des composés des formules
R¹R²R³Si-X (Hal)ₙ (A)
Y (Hal)ₘ (B)
Me₂Sₓ (C)
où
R¹, R² et R³ sont identiques ou différents et représentent des restes chlore, alkyle en C₁-C₁₈ ou alcoxy en C₁-C₁₈, qui peuvent éventuellement être interrompus par des atomes d'oxygène, d'azote ou de soufre, ou représentent phényle en C₆-C₁₂, phénoxy en C₆-C₁₂, alkylaryle en C₇-C₁₈ ou alkylaryloxy en C₇-C₁₈, avec la condition qu'au moins l'un des restes R¹ à R³ soit un groupe alcoxy, phénoxy, alkylaryloxy ou un atome de chlore,
X représente des restes alkylène en C₁-C₁₈ linéaires, ramifiés ou cycliques, éventuellement insaturés, qui peuvent éventuellement être interrompus par des atomes d'oxygène,
Y représente un reste hydrocarboné en C₁-C₃₆ linéaire, ramifié, éventuellement insaturé ou aromatique mono- à tétravalent, qui peut éventuellement être substitué par des groupes aryle en C₁-C₁₂, alcoxy en C₁-C₁₂, hydroxyle, cyano, amide, C₁-C₁₇-COO ou C₁-C₁₈-OOC, acide carboxylique et acide sulfonique ainsi que leurs sels, et qui peut éventuellement être interrompu par des atomes d'oxygène, d'azote ou de soufre, ou représente un groupe hétéroaryle mono- à trivalent,
m représente un nombre entier de 1 à 4,
n représente un nombre entier de 1 à 3,
x représente un nombre de 1 à 8,
Hal représente le fluor, le chlore ou le brome, et
Me représente l'ammonium ou un atome métallique.
